# DEMANDE DE BREVET EUROPEEN

(11) **EP 1 600 579 A1**
(43) Date de publication de la demande: **30.11.2005**
(21) Numéro de dépôt: 05004177.1
(22) Date de dépôt: 25.02.2005
(51) Int. Cl.: E04F 15/04

(54) **Système de fixation de panneaux d'habillage, notamment lames de parquet**

(30) Priorité: 27.02.2004 FR 0401980
(71) Demandeur: Cerland S.A.S., 35170 Bruz (FR)
(72) Inventeur: Roisnel, Frank chez Maître Demoly, 75008 Paris (FR)
(74) Mandataire: Demoly, Pascale

(57) **Abrégé**

Système de fixation (1) d'au moins deux panneaux d'habillage successifs sur un support de référence (3), notamment lames de parquets en bois (2), du type constitué par un clip (4) présentant un patin de guidage inférieur (5), de part et d'autre duquel s'étendent deux ailes latérales (6, 7) aptes à être engagées lors du montage dans deux rainures longitudinales (8, 9) de deux lames successives (2), afin d'assurer le bridage simultané de celles-ci, par l'intermédiaire d'une vis centrale (10) traversant le clip (4) pour se visser dans le support de référence (3).

## Description

La présente invention concerne un système de fixation d'au moins deux panneaux d'habillage successifs sur un support de référence, notamment des lames de parquet en bois pour intérieur, mais également des lames en bois pour réaliser des terrasses extérieures.

Des systèmes de fixation pour réaliser ce type de travaux sont connus et sont généralement du type constitué par un clip présentant un patin de guidage inférieur, de part et d'autre duquel s'étendent deux ailes latérales aptes à être engagées lors du montage dans deux rainures longitudinales de deux lames successives, afin d'assurer le guidage simultané de celles-ci, par l'intermédiaire d'une vis centrale traversant le clip pour se visser dans le support de référence.

Ce type de clip, bien que donnant généralement satisfaction, est néanmoins limité à un type de lames de parquet bien déterminé, dont les rainures d'assemblage destinées à l'introduction du clip ont un profil adapté à la section des ailes de celui-ci.

Ceci présente en outre l'inconvénient de devoir monter obligatoirement les lames dans un sens et pas dans l'autre, sans aucune possibilité de réversibilité des lames.

Ceci limitent grandement la créativité dans ce domaine.

De plus, à terme, l'usure des lames nécessite la réfection entière du parquet avec de nouvelles lames, alors, que l'autre face non usée, pourrait être réutilisée en vue d'une nouvelle période d'usage.

La présente invention a pour but de remédier à ces inconvénients, et concerne à cet effet un système de fixation d'au moins deux panneaux d'habillage successifs sur un support de référence, notamment lames de parquets en bois, du type constitué par un clip présentant un patin de guidage inférieur, de part et d'autre duquel s'étendent deux ailes latérales aptes à être engagées lors du montage dans deux rainures longitudinales de deux lames successives, afin d'assurer le bridage simultané de celles-ci, par l'intermédiaire d'une vis centrale traversant le clip pour se visser dans le support de référence, caractérisé en ce que le clip présente deux ailes latérales dont les côtés longitudinaux et leurs faces supérieure et inférieure sont respectivement parallèles entre eux, et en ce que l'épaisseur constante desdites ailes et la hauteur relative du patin de guidage par rapport aux dimensions et au positionnement des rainures des lames à assembler sont telles à permettre le coulissement et le serrage du clip dans celles-ci, dont les rebords longitudinaux supérieur et inférieur sont également parallèles entre eux et réalisés symétriquement à mi-hauteur des lames, de manière à rendre celles-ci réversibles.

L'invention concerne également les lames de parquet en bois destinées à être fixées par l'intermédiaire d'un clip cité ci-dessus, lesdites lames comportant une rainure positionnée de manière à les rendre réversibles.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels :

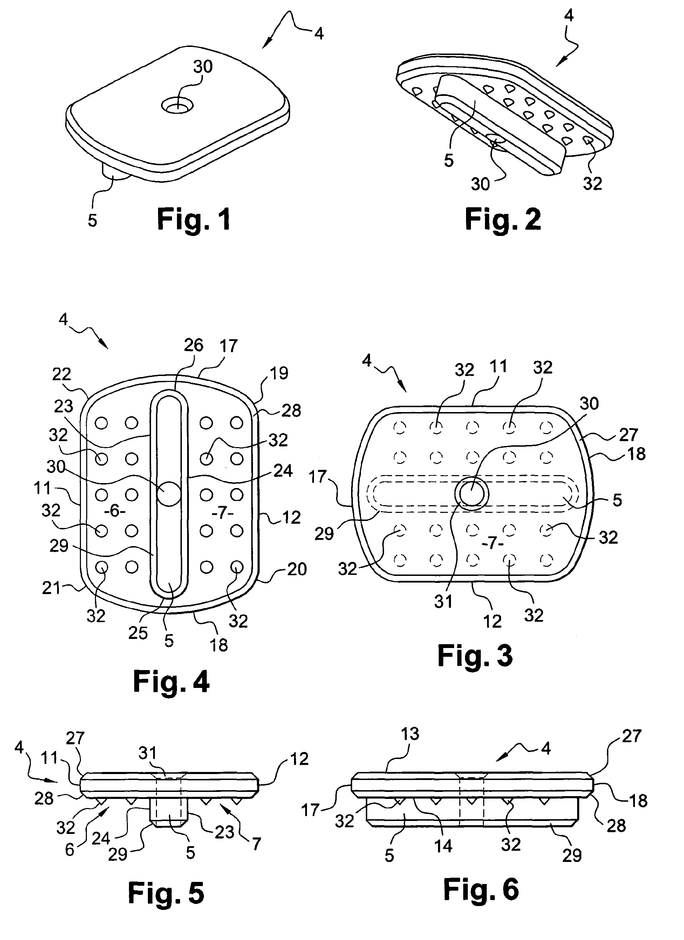

La figure 1 représente en perspective un clip de fixation selon l'invention, en vue de dessus.
La figure 2 représente en perspective un clip de fixation selon l'invention, en vue de dessous.
La figure 3 représente à échelle agrandie un clip selon les figures 1 et 2 en vue de dessus.
La figure 4 représente à échelle agrandie un clip selon les figures 1 et 2 en vue de dessous.
La figure 5 est une vue en bout du clip selon la figure 4.
La figure 6 est une vue de côté du clip selon la figure 3.
La figure 7 est une vue en perspective d'un clip selon l'une des figures 1 à 6, muni d'une vis de fixation en cours de montage entre deux lames successives.

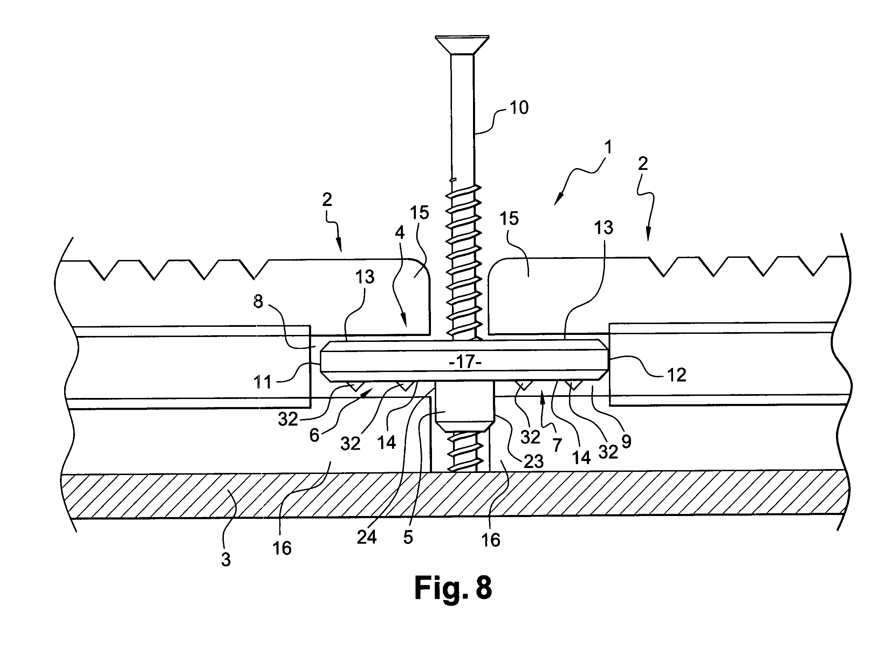

La figure 8 est une vue d'un clip, en place entre deux lames successives, et en cours de fixation par une vis.
Les figures 9 à 16 représentent à titre d'exemples une série de lames de profil et de dimension différentes.

Le système de fixation 1 représenté sur les figures est destiné à l'assemblage, selon le présent exemple de réalisation, d'une pluralité de lames de parquet en bois 2 destinées à habiller un support de référence 2, par exemple une terrasse en béton.

Bien entendu il pourra s'agir également de panneaux d'habillage destinés à tout autre support 3, vertical par exemple.

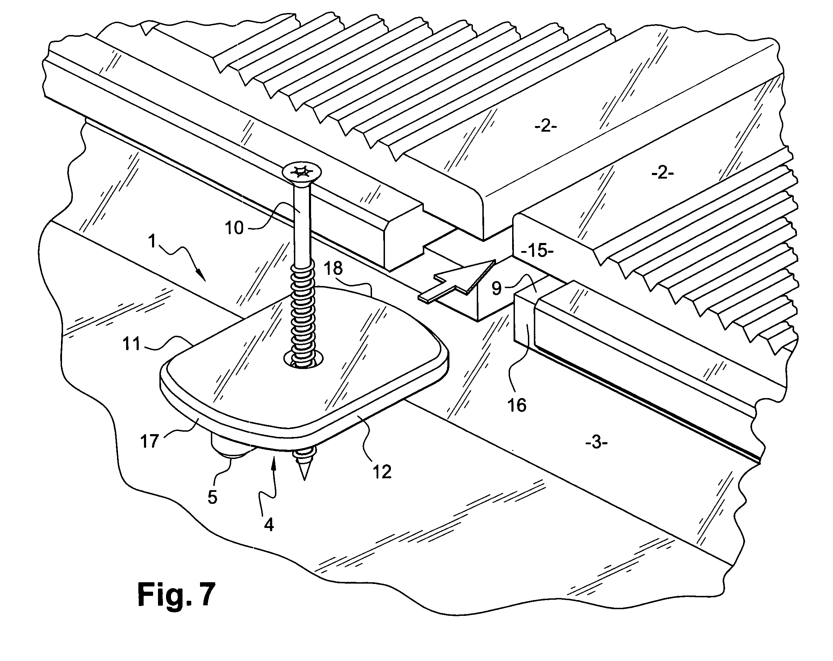

Le système de fixation 1 est du type constitué par un clip 4 présentant un patin de guidage inférieur 5, de part et d'autre duquel s'étendent deux ailes latérales 6, 7 aptes à être engagées lors du montage dans deux rainures longitudinales 8, 9 de deux lames successives 2, afin d'assurer le bridage simultané de celles-ci, par l'intermédiaire d'une vis centrale 10 traversant le clip 4 pour se visser dans le support de référence 3. Ceci est particulièrement bien visible à la figure 7.

Selon une première caractéristique de l'invention, le clip se caractérise d'une part en ce qu'il présente deux ailes latérales 6, 7 dont les côtés longitudinaux 11, 12 et leurs faces supérieure et inférieure 13, 14 sont respectivement parallèles entre eux, et d'autre part en ce que l'épaisseur constante desdites ailes 6, 7 et la hauteur relative du patin de guidage 5 par rapport aux rainures 8, 9 des lames 2 à assembler dont telles à permettre le coulissement et le serrage du clip 4 dans lesdites rainures 8, 9.

Les rainures 8, 9 ont des rebords longitudinaux supérieur et inférieur 15, 16 qui sont également parallèles entre eux, pour définir une section de rainure quadrangulaire.

Enfin, celles-ci sont réalisées symétriquement à mi-hauteur des lames 2.

De cette manière, les lames 2 sont réversibles selon l'un des objectifs de l'invention.

Plus précisément, la hauteur du patin 5 est au plus égale à l'épaisseur des rebords supérieur et inférieur de coulissement 15, 16 de la rainure 8, 9, qui sont de valeur identique et réalisés symétriquement par rapport à ladite rainure 8, 9, de manière à assurer, lors de la fixation, le serrage des lames 2, qu'elles soient disposées dans un sens ou dans l'autre.

En fait, la hauteur du patin 5 est inférieure à l'épaisseur des rebords supérieur et inférieur de coulissement 15, 16 des rainures 8, 9 de manière à s'assurer d'un serrage efficace par compression.

Comme le montre bien les figures, les ailes latérales 6, 7 du clip 4 associées au patin de guidage 5 présentent une section en T dont la branche supérieure horizontale formée par les ailes 6, 7, s'inscrit dans une figure quadrangulaire.

Préférentiellement, la figure dans laquelle s'inscrit la branche supérieure horizontale du T formé par les ailes 6, 7 du clip 4 est un rectangle.

Selon un mode de réalisation préférentiel, le plan supérieur du clip 4 présente deux bords droits longitudinaux 11, 12 parallèles entre eux et deux bords d'extrémité transversaux 17, 18 arrondis et reliés audits bords droits longitudinaux 11, 12 par des zones 19, 20, 21, 22 également arrondies.

Ceci a pour but de faciliter l'introduction du clip 4 dans les rainures 8 et 9 de deux lames successives 2.

En ce qui concerne le patin de guidage 5, celui-ci s'inscrit également dans un rectangle et comporte deux bords droits longitudinaux 23, 24 parallèles à ceux 11, 12 des ailes 6, 7 et reliés entre eux par deux bords d'extrémité arrondis 25, 26.

Ceci a également pour but de faciliter l'introduction du clip 4 entre deux rainures 8, 9 de deux lames 2 successives d'un parquet à réaliser.

Il est à noter que la longueur du patin de guidage 5 est d'une longueur sensiblement égale à celle des ailes 6, 7 définissant les plans supérieur et inférieur du clip 4.

Selon le présent exemple de réalisation, pour des raisons de solidité, le patin 5 est formé par un bloc plein, mais bien entendu il pourrait également être creux.

De manière également à faciliter l'introduction du clip 4 dans les rainures 8, 9 de deux lames successives 2, les plans supérieur et inférieur du clip 4 définis par lesdites ailes 6, 7 et son patin de guidage 5 présentent des chanfreins périphériques.

Par ailleurs, le clip 4 présente un trou 30 de passage d'une vis de fixation 10 traversant son plan supérieur défini par les ailes 6, 7 et le patin de guidage 5, ledit trou 30 étant de forme cylindrique, dont l'extrémité supérieure comporte un chanfrein 31, pour accepter une tête tronconique de la vis 10.

Selon une autre caractéristique de l'invention, la face inférieure 14 des ailes latérales 6, 7 présente une pluralité de picots 32 destinés à améliorer l'accroche du clip 4 dans les rebords 16 des rainures 8, 9 des lames 2 à assembler, au moment du serrage.

Préférentiellement, les picots 32 sont de forme conique mais ils pourraient être de toute autre forme.

Il est à noter que le clip 4 qui vient d'être décrit est avantageusement obtenu par moulage d'un matériau plastique tel que polypropylène, celui-ci étant armé de fibres de verre pour une meilleure résistance.

Les vis 30 utilisées sont préférentiellement en acier zingué lorsqu'elles sont destinées à la réalisation d'une terrasse extérieure.

Dans ce cas, les lames 2 sont en pin traité. Peuvent être également utilisés des essences exotiques telles que le yellow-balau, l'ipé et le massaranduba. Ces essences sont préférentiellement sélectionnées car elles offrent une durabilité et une esthétique dans les réalisations.

Egalement, c'est le noir qui est retenu pour constituer la couleur du clip, car cette couleur s'harmonise avec les différentes essences de bois précitées.

Il est à noter que, si l'invention concerne un clip de fixation, qui vient d'être décrit, elle concerne également des lames en bois 2, adaptées audit clip 4 et comportant de part et d'autre de ses côtés longitudinaux une rainure d'assemblage 8 et 9 destinée à recevoir le clip 4 et réalisée symétriquement à mi-hauteur de la lame 2, de manière à rendre celle-ci réversible.

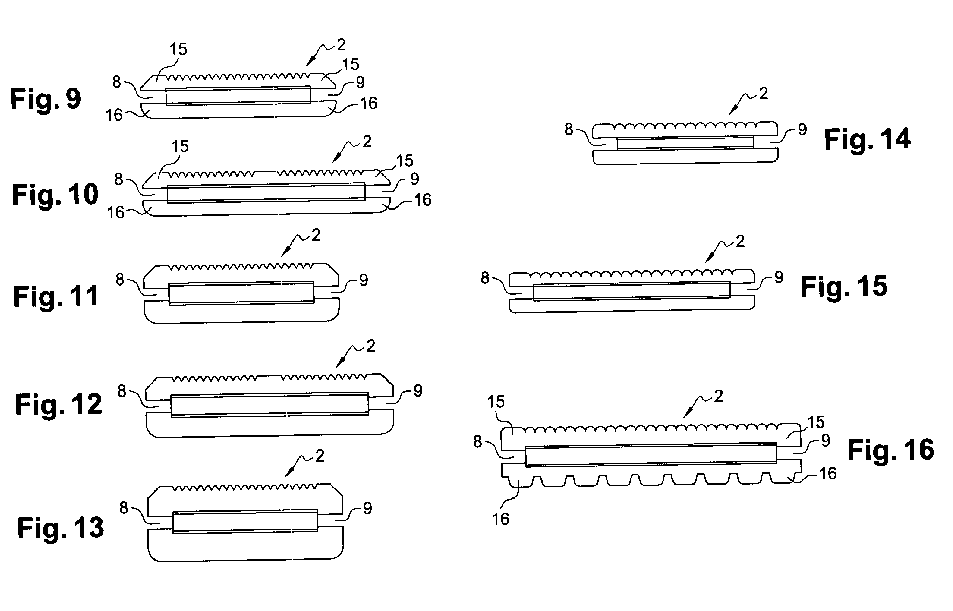

Comme le montrent bien les figures 9 à 16, les lames présentent des faces de profil différent, strié ou lisse, de manière à permettre toute composition dans une gamme prédéterminée.

Les dimensions des lames pourront également être différentes. C'est ainsi que :
- La figure 9 représente une lame de 20 x 95mm.
- La figure 10 représente une lame de 20 x 120mm.
- La figure 11 représente une lame de 28 x 95mm.
- La figure 12 représente une lame de 28 x 120mm.
- La figure 13 représente une lame de 35 x 95mm.
- La figure 14 représente une lame de 19 x 90mm.
- La figure 15 représente une lame de 21 x 120mm.
- La figure 16 représente une lame de 28 x 145mm.

Bien entendu, toute autre forme et toute autre dimension peuvent être envisagées sans sortir de la présente invention.

C'est ainsi par exemple que pourront être panachées des lames avec des stries étroites et des stries larges, lesdites lames pouvant également être elles-mêmes de largeur différente, mais d'une épaisseur identique bien entendu.

Un tel système permet donc une grande créativité avec un système de fixation s'effectuant par simple vissage ou dévissage vertical à l'aide d'une visseuse-dévisseuse et d'un embout adapté permettant le passage entre deux lames, sans aucune dégradation des matériaux.

L'association des matériaux composant les trois matériaux de base, à savoir les clips, les vis et les lames permet d'éviter toute dégradation à plus ou moins long terme, tout en offrant une très grande sécurité pour les utilisateurs de la terrasse, sans risque de blessure. En effet, aucune fixation de quelque nature que ce soit n'est en saillie.

Un autre avantage de l'invention réside dans le fait que la pose des clips s'effectue au fur et à mesure de l'avancement de la réalisation du parquet ou de la terrasse, sans aucun traçage ni positionnement préalable des vis, celles-ci étant introduites dans le clip après mise en place de ce dernier entre deux lames.

## Revendications

1. Système de fixation (1) d'au moins deux panneaux d'habillage successifs sur un support de référence (3), notamment lames de parquets en bois (2), du type constitué par un clip (4) présentant un patin de guidage inférieur (5), de part et d'autre duquel s'étendent deux ailes latérales (6, 7) aptes à être engagées lors du montage dans deux rainures longitudinales (8, 9) de deux lames successives (2), afin d'assurer le bridage simultané de celles-ci, par l'intermédiaire d'une vis centrale (10) traversant le clip (4) pour se visser dans le support de référence (3), **caractérisé en ce que** le clip (4) présente deux ailes latérales (6, 7) dont les côtés longitudinaux (11, 12) et leurs faces supérieure et inférieure (13, 14) sont respectivement parallèles entre eux, et **en ce que** l'épaisseur constante desdites ailes (6, 7) et la hauteur relative du patin de guidage (5) par rapport aux dimensions et au positionnement des rainures (8, 9) des lames (2) à assembler sont telles à permettre le coulissement et le serrage du clip (4) dans celles-ci, dont les rebords longitudinaux supérieur et inférieur (15, 16) sont également parallèles entre eux et réalisés symétriquement à mi-hauteur des lames (2), de manière à rendre celles-ci réversibles.

2. Système selon la revendication 1, **caractérisé en ce que** la hauteur du patin (5) est au plus égale à l'épaisseur des rebords supérieur et inférieur de coulissement (15, 16) de la rainure (8, 9), qui sont de valeur identique et réalisés symétriquement par rapport à ladite rainure (8, 9), de manière à assurer, lors de la fixation, le serrage des lames (2), qu'elles soient disposées dans un sens ou dans l'autre.

3. Système selon l'une des revendications 1 ou 2, **caractérisé en ce que** les ailes latérales (6, 7) du clip (4) associées au patin de guidage (5) présentent une section en T dont la branche supérieure horizontale formée par les ailes (6, 7), s'inscrit dans une figure quadrangulaire.

4. Système selon la revendication 3, **caractérisé en ce que** la figure dans laquelle s'inscrit la branche supérieure horizontale du T formé par les ailes (6, 7) du clip (4) est un rectangle.

5. Système selon la revendication 4, **caractérisé en ce que** le plan supérieur du clip (4) présente deux bords droits longitudinaux (11, 12) parallèles entre eux et deux bords d'extrémité transversaux (17, 18) arrondis et reliés audits bords droits longitudinaux (11, 12) par des zones (19, 20, 21, 22) également arrondies.

6. Système selon l'une des revendications 4 ou 5, **caractérisé en ce que** le patin de guidage (5) s'inscrit également dans un rectangle et comporte deux bords droits longitudinaux (23, 24) parallèles à ceux (11, 12) des ailes (6, 7) et reliés entre eux par deux bords d'extrémité arrondis (25, 26).

7. Système selon l'une des revendications 3 à 6, **caractérisé en ce que** les plans supérieur et inférieur du clip (4) définis par les ailes (6, 7) et le patin de guidage (5), ainsi que la base de ce dernier, présentent des chanfreins périphériques (27, 28, 29), de manière à faciliter son introduction dans les rainures (8, 9) de deux lames successives (2).

8. Système selon l'une des revendications 1 à 7, **caractérisé en ce que** le clip (4) présente un trou (30) de passage d'une vis de fixation (10) traversant son plan supérieur défini par les ailes (6, 7) et le patin de guidage (5), ledit trou (30) étant de forme cylindrique, dont l'extrémité supérieure comporte un chanfrein (31), pour accepter une tête tronconique de la vis (10).

9. Système selon l'une des revendications 1 à 8, **caractérisé en ce que** la face inférieure (14) des ailes latérales (6, 7) présente une pluralité de picots (32) destinés à améliorer l'accroche du clip (4) dans les rebords (16) des rainures (8, 9) des lames (2) à assembler, au moment du serrage.

10. Panneaux d'habillage, notamment lames de parquet en bois, destiné à être fixé sur un support de référence (3) par un clip de fixation (4) selon l'une des revendications 1 à 9, **caractérisé en ce que** chacune des lames (2) comporte de part et d'autre de ses côtés longitudinaux une rainure d'assemblage (8, 9) destinée à recevoir le clip (4), et réalisée symétriquement à mi-hauteur de la lame (2), de manière à rendre celle-ci réversible.

11. Panneaux, notamment lames de parquet en bois, selon la revendication 10, **caractérisé en ce que** chacune des lames (2) le composant présente des phases de profil différent strié ou lisse, de manière à permettre toute composition dans une gamme prédéterminée.
